# EUROPEAN PATENT APPLICATION

(11) **EP 0 933 766 A2**
(43) Date of publication of application: **04.08.1999**
(21) Application number: 99300260.9
(22) Date of filing: 13.01.1999
(51) Int. Cl.: G11B 20/00, G11B 5/008, G11B 5/09, G11B 15/087, G11B 27/30, G11B 27/36

(54) **Information reproduction apparatus and information recording and reproduction apparatus**

(30) Priority: 16.01.1998 JP 2020698; 16.01.1998 JP 2020798
(71) Applicant: Victor Company of Japan, Ltd., Yokohama 221-0022 (JP)
(72) Inventor: Shibuya, Michinori, Yokohama (JP)
(74) Representative: Senior, Alan Murray

(57) **Abstract**

An information recording/reproduction apparatus is provided which records and reproduces analog and digital information on and from a storage medium such as a magnetic tape (50). The apparatus is designed to discriminate between the analog information (5) and the digital information (10) in a reproduction mode of operation based on at least one of the level of a signal reproduced from the storage medium and a sub-code peculiar to the digital information.

## Description

The present invention relates generally to an information reproduction apparatus designed to reproduce analog and digital information signals recorded in a storage medium, and more particularly to an information reproduction apparatus capable of discriminating between analog information and digital information in a reproduce mode of operation.

Japanese Patent First Publication No. 8-63875 discloses an information reproduction apparatus designed to reproduce analog and digital information signals and discriminate between them. This apparatus extracts (separates) a frequency component related to a synchronizing signal from signals reproduced from a storage medium to discriminate between the analog and digital information signals based on the level of the frequency component.

The above conventional apparatus, however, encounters the drawbacks in that a separating circuit for the synchronizing signal and a filter for extracting the given frequency component from the reproduced signals are needed, thus resulting in complexity of the structure and in that frequency components of the digital information signal, if close to the analog information signal, may be identified as the analog information signal in error.

It is therefore, a principal aim of the present invention to avoid or alleviate the disadvantages of the prior art.

It is another aim of the present invention to provide a simple structure of an information reproduction apparatus capable of determining whether information being reproduced from a storage medium is analog or digital one.

According to one aspect of the invention, there is provided an information reproducing apparatus designed to reproduce analog information and digital information recorded on a storage medium which comprises: (a) a level detecting circuit detecting a level of an output signal reproduced from the storage medium and outputting a signal indicative thereof; (b) a sub-data detecting circuit detecting sub-data peculiar to the digital information and outputting a signal indicative thereof; and (c) an information type determining circuit determining whether information being reproduced from the storage medium is analog or digital one based on the signals outputted from the level detecting circuit and the sub-data detecting circuit.

In the preferred mode of the invention, the storage medium is a magnetic storage medium. An analog information reproducing magnetic head and a digital information reproducing magnetic head are provided. If an angle which a gap of a magnetic head makes with a track recorded on the magnetic storage medium is defined as a head azimuth angle, the analog information reproducing magnetic head is oriented at a first head azimuth angle corresponding to a head azimuth angle of a magnetic head for recording the analog information on the magnetic storage medium. The digital information reproducing magnetic head is oriented at a second head azimuth angle which is different from the first head azimuth angle and which corresponds to a head azimuth angle of a magnetic head for recording the digital information on the magnetic storage medium.

The information reproducing apparatus operates in either of an analog mode for reproducing the analog information and a digital mode for reproducing the digital information. When the information reproducing apparatus is operating in one of the analog and digital modes, and when the signal outputted from the level detecting circuit is greater than a preselected (predetermined) level, the information type determining circuit determines that the information being reproduced is one of the analog information and the digital information corresponding to the one of the analog mode and the digital mode in which the information reproducing apparatus is operating.

The information type determining circuit performs auto-tracking control to control a relative position of one of the analog information reproducing magnetic head and the digital information reproducing magnetic head to tracks recorded on the storage medium so as to maximize the level of the signal reproduced from the storage medium. The information type determining circuit may make the above determination using the signal outputted from the level detecting circuit after the auto-tracking control.

The information type determining circuit may make the above determination when information recorded on a control track on the storage medium represents the presence of either of the analog and digital information on the storage medium.

The storage medium is disposed within a cassette which has record type information (e.g., a hole) indicating that the cassette is normally used in recording digital information. The information type determining circuit makes the above determination based on the record type information of the cassette.

According to second aspect of the invention, there is provided an information reproducing apparatus for reproducing analog and digital information recorded on a magnetic storage medium in a manner wherein, if an angle which a gap of a magnetic head makes with a track recorded on the magnetic storage medium is defined as a head azimuth angle, the digital information is recorded by a digital information recording magnetic head oriented at a head azimuth angle different from that of an analog information recording magnetic head recording the analog information on the magnetic storage medium, which comprises: (a) an analog information reproducing magnetic head oriented at a first head azimuth angle corresponding to the head azimuth angle of the analog information recording magnetic head; (b) a digital information reproducing magnetic head oriented at a second head azimuth angle corresponding the head azimuth angle of the digital information recording magnetic head; (c) a level detecting circuit detecting a level of a signal reproduced from the magnetic storage medium through each of the analog information reproducing magnetic head and the digital information reproducing magnetic head to provide a signal indicative thereof; and (d) an information type determining circuit determining whether information being reproduced from the magnetic storage medium is digital or analog one based on the signal outputted by the level detecting circuit.

In the preferred mode of the invention, the information reproducing apparatus operates in either of an analog mode for reproducing the analog information and a digital mode for reproducing the digital information. When the information reproducing apparatus is operating in one of the analog and digital modes, and when the signal outputted from the level detecting circuit is greater than a preselected level, the information type determining circuit determines that the information being reproduced is one of the analog information and the digital information corresponding to the one of the analog mode and the digital mode in which the information reproducing apparatus is operating.

The information type determining circuit performs auto-tracking control to control a relative position of one of the analog information reproducing magnetic head and the digital information reproducing magnetic head to tracks recorded on the magnetic storage medium so as to maximize the level of the signal reproduced from the magnetic storage medium. The information type determining circuit makes the above determination using the signal outputted from the level detecting circuit after the auto-tracking control.

The information type determining circuit may make the above determination when information recorded on a control track on the magnetic storage medium represents the presence of either of the analog and digital information on the magnetic storage medium. The magnetic storage medium is disposed within a cassette which has record type information indicating that the cassette is normally used in recording digital information. The information type determining circuit may make the above determination based on the record type information of the cassette.

According to the third aspect of the invention, there is provided an information reproducing apparatus designed to reproduce analog information and digital information recorded on a storage medium which comprises: (a) a sub-data detecting circuit detecting sub-data peculiar to the digital information to provide a signal indicative thereof; and (b) an information type determining circuit determining whether information being reproduced from the storage medium is analog or digital one based on the signal outputted from the sub-data detecting circuit.

According to the fourth aspect of the invention, there is provided an information recording and reproducing apparatus designed to record and reproduce analog information and digital information on and from a storage medium which comprises: (a) a level detecting circuit detecting a level of an output signal reproduced from the storage medium and outputting a signal indicative thereof; (b) a sub-data detecting circuit detecting sub-data peculiar to the digital information and outputting a signal indicative thereof; and (c) an information type determining circuit determining whether information being reproduced from the storage medium is analog or digital one based on the signals outputted from the level detecting circuit and the sub-data detecting circuit.

According to the fifth aspect of the invention, there is provided an information recording and reproducing apparatus for recording and reproducing analog and digital information on and from a magnetic storage medium which comprises: (a) an analog information recording/reproducing magnetic head oriented at a first head azimuth angle that is an angle which a gap of the head makes with a track recorded on the magnetic storage medium; (b) a digital information recording/reproducing magnetic head oriented at a second head azimuth angle different from the first head azimuth angle; (c) a level detecting circuit detecting a level of a signal reproduced from the magnetic storage medium through each of the analog information recording/reproducing magnetic head and the digital information recording/reproducing magnetic head to provide a signal indicative thereof; and (d) an information type determining circuit determining whether information being reproduced from the magnetic storage medium is digital or analog one based on the signal outputted by the level detecting circuit.

According to the sixth aspect of the invention, there is provided an information recording and reproducing apparatus designed to record and reproduce analog information and digital information on and from a storage medium which comprises: (a) a sub-data detecting circuit detecting sub-data peculiar to the digital information to provide a signal indicative thereof; and (b) an information type determining circuit determining whether information being reproduced from the storage medium is analog or digital one based on the signal outputted from the sub-data detecting circuit.

According to the seventh aspect of the invention, there is provided an information reproducing apparatus which comprises: (a) a magnetic head scanning tracks which are recorded on a magnetic tape and which slant to a length of the magnetic tape to reproduce information from the magnetic tape; and (b) a tracking control mechanism shifting a relative position of a scanning path of the magnetic head to the tracks on the magnetic tape gradually with time in a reproduction mode of operation in which the magnetic tape is moved at a speed faster than that in a recording mode of operation .

In the preferred mode of the invention, the tracking control mechanism shifts the relative position by a given amount at regular intervals.

According to the eighth aspect of the invention, there is provided an information recording and reproducing apparatus which comprises: (a) a magnetic head scanning tracks which are recorded on a magnetic tape and which slant to a length of the magnetic tape to record and reproduce information on and from the magnetic tape; and (b) a tracking control mechanism shifting a relative position of a scanning path of the magnetic head to the tracks on the magnetic tape gradually with time in a reproduction mode of operation in which the magnetic tape is moved at a speed faster than that in a recording mode of operation.

The present invention will be understood more fully from the detailed description given hereinbelow and from the accompanying drawings of the preferred embodiments of the invention, which, however, should not be taken to limit the invention to the specific embodiments, but are for explanation and understanding only.

In the drawings:
Fig. 1 is a block diagram which shows an information recording/reproduction apparatus according to the first embodiment of the invention;
Figs. 2 and 3 show a flowchart of a program performed by the information recording/reproduction apparatus in Fig. 1 to determine the type of information being reproduced;
Fig. 4 shows a track format of a magnetic tape; and
Fig. 5 is a flowchart of a program of auto-tracking control according to the second embodiment of the invention.

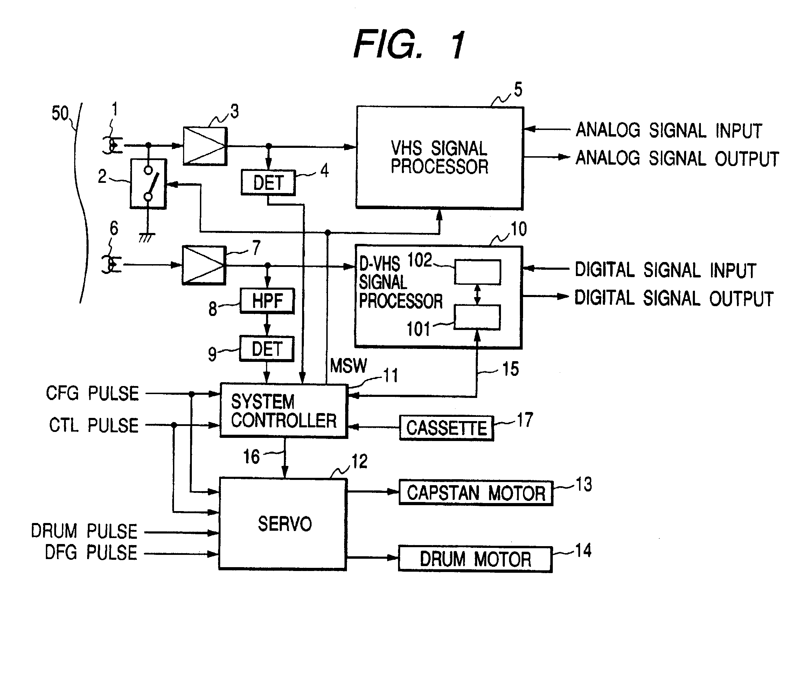

Referring now to the drawings, particularly to Fig. 1, there is shown an information recording/reproduction apparatus according to the first embodiment of the present invention.

The information recording/reproduction apparatus of this embodiment will be discussed below as a VTR which is in accordance with D-VHS (trade mark) standards to record and reproduce digital information such as an MPEG (Motion Picture Experts Group)-2 transport bit stream on and from a magnetic tape and which is in accordance with VHS and S-VHS standards to record and reproduce analog information or analog video signals such as NTSC signals on and from the magnetic tape. In the following discussion, an operation mode in which digital information is recorded on or reproduced from a magnetic tape will be referred to as a D-VHS mode, and an operation mode in which analog information is recorded on or reproduced from the magnetic tape will be referred to as a VHS mode. The VTR is so designed that, in the VHS mode, recording and reproduction operations can be performed in an SP (Standard Play) mode in which the magnetic tape travels at a standard speed and an EP (Extended Play) mode in which the magnetic tape travels at 1/3 times the standard speed, and a reproduction operation can be performed in an LP (Long Play) mode in which the magnetic tape travels at 1/2 times the standard speed, and, in the D-VHS mode, recording and reproduction operations can be performed in a standard mode in which the magnetic tape travels at the same speed as that in the LP mode in the VHS mode. The magnetic tape is disposed in a cassette which has information as an indication (e.g., a hole) that this cassette is for the D-VHS.

The VTR of this embodiment includes a VHS magnetic head assembly 1, a D-VHS magnetic head assembly 6, reproducing amplifiers 3 and 7, a VHS signal processor 5, a D-VHS signal processor 10, a system controller 11, a drum motor 14, a capstan motor 13, and a servo circuit 12. The VHS magnetic head assembly 1 records and reproduces analog information signals on and from a magnetic tape 50. The D-VHS magnetic head assembly 6 records and reproduces digital information signals on and from the magnetic tape 50. The reproducing amplifiers 3 and 7 amplify outputs from the magnetic head assemblies 1 and 6 and input them into the VHS and D-VHS signal processors 5 and 10. The drum motor 14 drives a rotary drum (not shown) having disposed therein the magnetic head assemblies 1 and 6. The capstan motor 13 drives a capstan (not shown) for moving the magnetic tape 50. The servo circuit 12 controls operations of the capstan motor 13 and the drum motor 14.

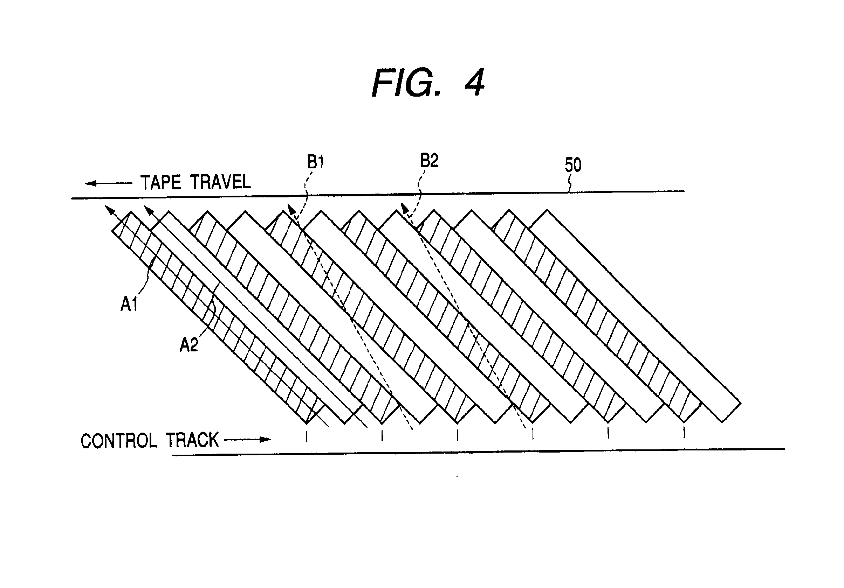

The magnetic head assemblies 1 and 6 each consist of first and second channel heads CH1 and CH2 which are disposed in the periphery of the rotary drum at an angular interval of 180°. As is well known, the first and second channel heads CH1 and CH2 alternately scan the magnetic tape 50 wrapped helically about the rotary drum over an angle slightly greater than 180° to record information thereon. Fig. 4 shows a recorded track pattern on the magnetic tape 50. A control track is formed on a lower end of the magnetic tape 50 for recording control pulses representing control information. In the drawing, hatched tracks are recorded by the first channel head CH1, while non-hatched tracks are recorded by the second channel head CH2. Arrows A1 and A2 indicate travel loci of the first and second channel heads CH1 and CH2 in a normal reproduce mode. Arrows B1 and B2 indicate travel loci of the first and second channel heads CH1 and CH2 in a search reproduce mode wherein the magnetic tape 50 is moved at a speed faster than that in a record mode of operation. The recorded track pattern, as shown in Fig. 4, is well known as used in VTRs in accordance with VHS standards.

The head azimuth of the VHS magnetic head assembly 1, that is, an angle which a head gap makes with the width of the tracks recorded on the magnetic tape 50 is ±6° (e.g., if the head azimuth of the head CH1 is +6°, the head azimuth of the head CH2 is -6°). The head azimuth of the D-VHS magnetic head assembly 6 is ±30° (i.e., if the head azimuth of the head CH1 is +30°, the head azimuth of the head CH2 is -30°). Therefore, when the magnetic tape 50 recorded in the VHS mode (i.e., by the VHS magnetic head assembly 1) is reproduced in the D-VHS mode (i.e., by the D-VHS magnetic head assembly 6) or alternatively, when the magnetic tape 50 recorded in the D-VHS mode (i.e., by the D-VHS magnetic head assembly 6) is reproduced in the VHS mode (i.e., by the VHS magnetic head assembly 1), it will result in an azimuth loss, thus leading to an excessive deterioration in reproduced signals (i.e., outputs of the magnetic heads). The information recording/reproduction apparatus of this embodiment uses this fact to determine, as will be described in detail later, whether information being reproduced from the magnetic tape 50 is one recorded in the VHS mode or in the D-VHS mode.

The D-VHS signal processor 10 includes a CPU 101 and a signal processing circuit 102. The CPU 101 connects with the system controller 11 through a bi-directional serial data bus 15 and controls the D-VHS signal processor 10. The signal processing circuit 102 converts digital signals inputted from an external device into output signals suitable for recording and subjects signals reproduced from the magnetic tape 50 to the reverse of processing operations when they were recorded. The D-VHS standards prescribe that a sub-code unique to digital information be recorded in a sub-code region formed near a lower end (i.e., near the control track) of a magnetic tape. When having detected the sub-code in reproduced signals, the signal processing circuit 102 transports it to the system controller 11 through the CPU 101 and the data bus 15.

The output of the reproducing amplifier 3 is also inputted to an envelope detector 4. The output of the envelope detector 4 is sent to the system controller 11. The output of the reproducing amplifier 7 is also supplied to an envelope detector 9 through a high-pass filter 8 whose output is inputted to the system controller 11.

Capstan FG (Frequency Generator) pulses (CFG pulses) having a frequency proportional to the speed of the capstan and control pulses reproduced from the control track on the magnetic tape 50 are inputted to the system controller 11 and the servo circuit 12. Drum pulses representing the phase angle of the rotary drum and drum FG pulses (DFG pulses) proportional to the speed of the rotary drum are inputted to the servo circuit 12. These input pulses are produced by a known magnetic head or a pulse generator.

The system controller 11 also connects with a cassette type identifying switch 17 which monitors on-off information on the type of a cassette containing therein a magnetic tape (i.e., a D-VHS cassette or another).

The system controller 11 uses, as will be discussed later in detail, the above described input signals to determine whether information being reproduced from the magnetic tape 50 is one recorded in the VHS mode or in the D-VHS mode and provides a signal indicative thereof to the CPU 101 through the data bus 15. The system controller 11 also provides to the VHS signal processor 5 and the switch circuit 2 a mode switch signal MSW indicative of a record mode (i.e., the VHS mode or the D-VHS mode) of the reproduced information. When the mode switch signal MSW indicates the D-VHS mode, the switch circuit 2 is turned on to establish electric communication between the VHS magnetic head assembly 1 to ground. The system controller 11 is also responsive to an input signal from an operation switch (not shown) to control a system operation of the information recording/reproduction apparatus.

The servo circuit 12 connects with the system controller 11 through a serial data bus 16. The system controller 11 sends a result of the mode determination and a tracking control signal for controlling a relative position of the magnetic heads to recorded tracks on the magnetic tape 50 to the servo circuit 12 through the data bus 16. The servo circuit 12 uses the input signals to control operations of the capstan motor 13 and the drum motor 14. Specifically, in the record mode of operation, the servo circuit 12 controls movement of the capstan motor 13 and the drum motor 14 so that information may be recorded on the magnetic tape 50 in a given track pattern and, in a reproduce mode of operation, so that the magnetic head assembly 1 or 6 scans each of recorded tracks on the magnetic tape 50 in a given scanning pattern (see A1, A2, B1, and B2 in Fig. 4).

The information recording/reproduction apparatus of this embodiment, as described above, features determination of a record mode in which the information is recorded on the magnetic tape 50, and recording circuit components such as recording amplifiers for supplying recording currents to the magnetic head assemblies 1 and 6 are omitted in Fig. 1.

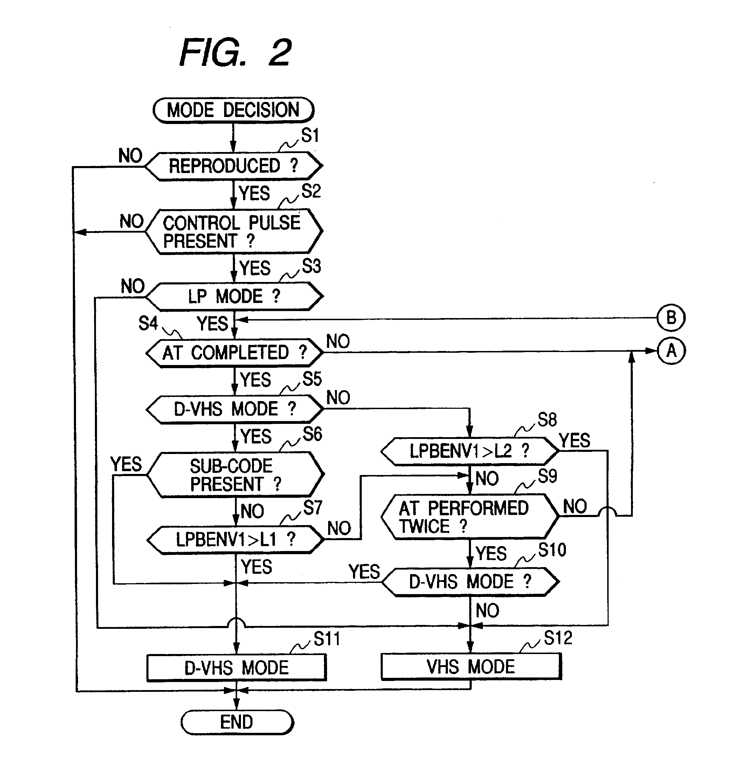

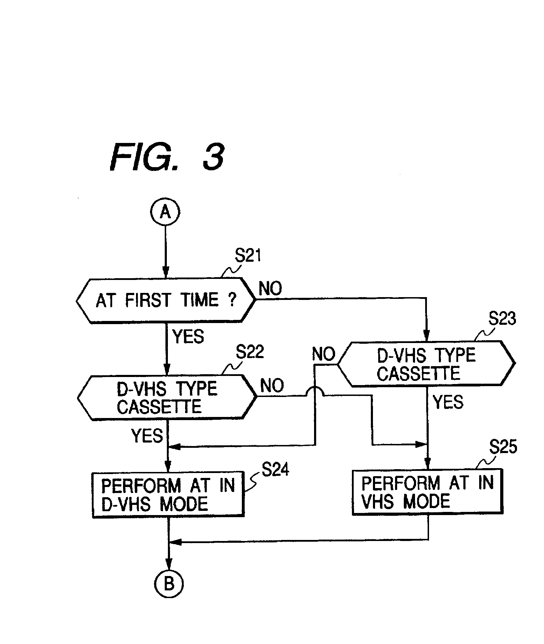

Figs. 2 and 3 show a flowchart of a program or sequence of logical steps performed by the system controller 11 to determine whether information being reproduced from the magnetic tape 50 is analog or digital one, that is, to determine which of the VHS mode and the D-VHS mode was used in recording the magnetic tape 50.

After entering the program, the routine proceeds to step 1 wherein it is determined whether the magnetic tape 50 is being reproduced or not. If a NO answer is obtained, then the routine terminates. Alternatively, if a YES answer is obtained, then the routine proceeds to step 2 wherein a control pulse is present or not. If a NO answer is obtained meaning that a portion of the magnetic tape being reproduced carries no information, then the routine terminates. Alternatively, if a YES answer is obtained, then the routine proceeds to step 3 wherein it is determined whether the tape speed mode of the magnetic tape 50 during recording was the LP mode (i.e., the standard mode in the D-VHS) or not (which will be referred to as FG (Frequency Generator) determination below). The FG determination is accomplished by counting the number of capstan FG pulses NCFG generated in an input interval of control pulses. Specifically, if the number of capstan FG pulses NCFG when the record mode is the EP mode is defined as NEP, then the number of capstan FG pulses NCFG when the record mode is the LP mode is expressed as NCFG = 3/2 × NEP. The use of this relation, thus, allows the record mode to be determined. When a magnetic tape recorded in the D-VHS mode is reproduced, it is determined that the magnetic tape is recorded in the LP mode. Thus, if it is determined in step 3 that the record mode is either of the SP mode and the EP mode and not the LP mode, the magnetic tape cannot be recorded in the D-VHS mode, and the routine proceeds to step 12 wherein it is determined that the magnetic tape 50 is recorded in the VHS mode.

If a YES answer is obtained in step 3 meaning that the record mode of the magnetic tape 50 is the LP mode, then the routine proceeds to step 4 wherein auto-tracking control (AT) has been completed or not. The auto-tracking control is to change a relative position of a scanning path of a magnetic head to a recorded track on a magnetic tape (which will be referred to as head tracking below) to find an optimum scanning path in which a reproduced signal (i.e., an output of the envelope detector) has a maximum level and to bring the head track into agreement with the optimum scanning path. If this program execution cycle is the first cycle, a NO answer is obtained in step 4, and the routine proceeds to step 21 in Fig. 3 wherein the current auto-tracking control is the first activation or not. If this program execution cycle is the first cycle, a YES answer is obtained, and the routine proceeds to step 22 wherein it is determined whether a cassette loaded in the information recording/reproducing apparatus is of the D-VHS type or not. If a YES answer is obtained, then the routine proceeds to step 24 wherein the D-VHS mode is provided to use the magnetic head assembly 6 in reproducing information from the magnetic tape 50, and the auto-tracking control is performed.

After completion of the auto-tracking control in the D-VHS mode, the routine proceeds from step 4 to step 5 wherein it is determined whether the D-VHS mode is provided or not. If a YES answer is obtained, then the routine proceeds to step 6 wherein it is determined that the CPU 101 of the D-VHS signal processor 10 has detected a sub-code unique to the D-VHS mode or not. If a YES answer is obtained, then the routine proceeds to step 11 wherein it is determined that the magnetic tape 50 is being reproduced in the D-VHS mode. Alternatively, if a NO answer is obtained in step 6, then the routine proceeds to step 7 wherein it is determined whether an output level LPBENV1 of the envelope detector 9 is greater than a first reference level L1 or not where L1 is on the order of 20% of an average output level of the envelope detector 9 when the magnetic tape recorded in the D-VHS mode is reproduced in the D-VHS mode. If LPBENV1 > L1 in step 7, it concludes that the D-VHS mode provided in step 24 is a correct mode based on the fact that in a case of the magnetic tape recorded in the VHS mode, the output level LPBENV1 is lowered excessively below L1 due to a difference in head azimuth. The routine proceeds to step 11 wherein it is determined that the magnetic tape 50 is recorded in the D-VHS mode.

If LPBENV1 ≦ L1 in step 7, then the routine proceeds to step 9 wherein the auto-tracking control has been performed two times or not. If this program execution cycle is the first cycle, then a NO answer is obtained, and the routine proceeds to step 21 in Fig. 3. In this case, a NO answer is obtained in step 21, and the routine proceeds to step 23 wherein it is determined whether the cassette loaded in the information recording/reproduction apparatus is of the D-VHS type or not. If a YES answer is obtained, then the routine proceeds to step 25 wherein the auto-tracking control is performed in the VHS mode (i.e., using the magnetic head assembly 1).

After completion of the auto-tracking control in the VHS mode, the routine proceeds from step 4 to step 5 wherein it is determined whether the D-VHS mode is provided or not. In this case, a NO answer is obtained, and the routine proceeds to step 8 wherein an output level LPBENV2 of the envelope detector 4 is greater than a second reference level L2 or not where L2 is on the order of 20% of an average output level of the envelope detector 4 when the magnetic tape recorded in the VHS mode is reproduced in the VHS mode. If LPBENV2 > L2 in step 8, it concludes that the VHS mode provided in step 25 is a correct mode based on the fact that in a case of the magnetic tape recorded in the D-VHS mode, the output level LPBENV2 is lowered excessively below L2 due to a difference in head azimuth. The routine proceeds to step 12 wherein it is determined that the magnetic tape 50 is recorded in the VHS mode.

Alternatively, if a NO answer is obtained in step 8 (LPENV2 ≦ L2), then the routine proceeds to step 9 wherein it is determined whether the auto-tracking control has been performed two times or not. In this case, a YES answer is obtained, and the routine proceeds to step 10 wherein it is determined whether the cassette is of the D-VHS type or not. If a YES answer is obtained, then the routine proceeds to step 11 wherein it is determined that the magnetic tape 50 is recorded in the D-VHS mode. Alternatively, if a NO answer is obtained in step 10, then the routine proceeds to step 12 wherein it is determined that the magnetic tape 50 is recorded in the VHS mode.

Usually, the output levels LPBENV1 and LPBENV2 of the envelope detectors 9 and 4 do not become lower than L1 and L2, respectively, when the control pulses are reproduced correctly. Thus, step 10 is hardly performed, but performed in a case where only the control pulses are recorded in the magnetic tape in error. In this case, the recording mode is determined, as described above, based on the type of the cassette as failsafe measures.

The discussion so far refers to the case where the D-VHS type cassette is loaded in the information recording/reproduction apparatus. In a case where another type of cassette or VHS cassette is loaded in the information recording/reproduction apparatus, if the first auto-tracking control is performed in the VHS mode, after which it is not determined that the magnetic tape 50 is recorded in the VHS mode, the second auto-tracking control is performed in the D-VHS mode. Even when the D-VHS type cassette is loaded, it is possible that analog information is recorded in the magnetic tape 50, therefore, it is impossible to discriminate between analog and digital information recorded on the magnetic tape 50 only depending upon the type of the cassette. There is, however, a high possibility that the D-VHS type cassette is recorded in the D-VHS mode. Thus, a desired time required for determine the recording mode of the magnetic tape 50 may be shortened by changing the order in which the auto-tracking control is performed in the D-VHS mode and the VHS mode depending upon the information on the type of the loaded cassette.

The information recording/reproduction apparatus of this embodiment is, as can be seen from the above discussion, designed to determine whether the magnetic tape 50 is recorded in the D-VHS mode or in the VHS mode, that is, whether information recorded on the magnetic tape 50 is digital or analog one based on the level of output signals from the magnetic heads and the presence of a sub-code used only in the D-VHS mode, thereby enabling the determination of the recording mode of the magnetic tape 50 without use of a special circuit.

The determination of the recording mode of the magnetic tape 50 may alternatively be made only by detecting the sub-code peculiar to the D-VHS mode. Specifically, if the sub-code is detected, it is determined that the magnetic tape 50 is recorded in the D-VHS mode, while if not, it is determined that the magnetic tape 50 is recorded in the VHS mode.

The above discussion refers only to the case where the magnetic tape 50 may be recorded and reproduced only in the standard mode in the D-VHS mode, but the D-VHS standards also prescribe an HD mode in which a magnetic tape is moved at two times the standard speed. The present invention may be used in an information recording/reproduction apparatus capable of reproducing a magnetic tape in the HD mode. Specifically, the travel speed of the magnetic tape in the HD mode in the D-VHS mode is equal to that in the SP mode in the VHS mode. Thus, even if it is determined that the travel mode of the magnetic tape 50 during recording was the SP mode, it is possible to determine the recording mode of the magnetic tape 50 based on the level of reproduced signals and the presence of the sub-code.

The present invention may be used with an information recording/reproducing apparatus using a magnetic disc. In this case, the tracking of the magnetic heads is kept in an optimum condition, thus eliminating the need for the auto-tracking control as described above.

In typical VTRs in accordance with the VHS standards, noise arises when, for example, the first channel magnetic head CH1 traverses any track for the second channel magnetic head CH2. In order to fix the location of such a noise bar on a reproduced picture, a positional relation between a scanning path of each magnetic head (B1, B2) and corresponding one of tracks recorded on a magnetic tape is, as shown in Fig. 4, kept constant. This may, however, lead to the following problem in the search reproduction. Specifically, typical VTRs in accordance with the D-VHS standards reproduces a sub-code recorded near a lower end of recorded tracks (i.e., near the control track), translates the contents of, for example, a program carried by the sub-code into character information, and displays it on a still picture reproduced immediately before the search reproduction. The constant positional relation between each magnetic head and recorded tracks may, thus, cause the sub-code not to be reproduced at all.

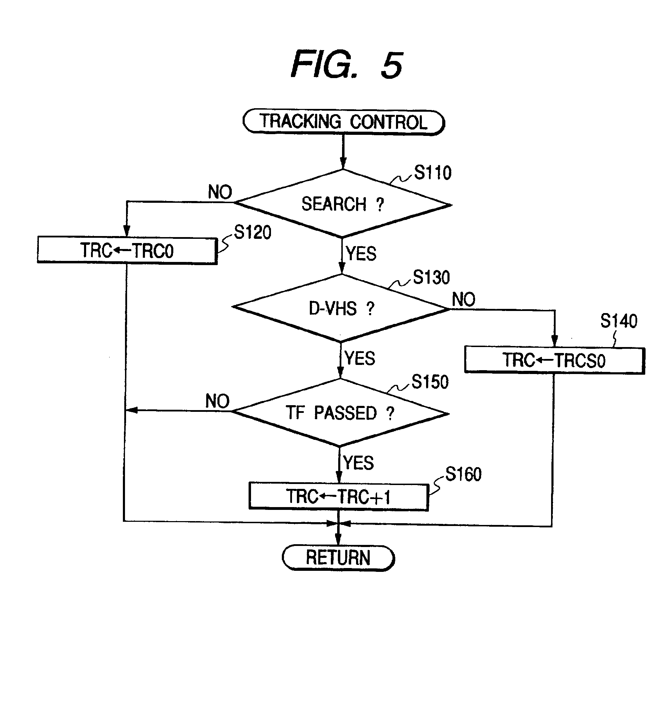

Fig. 5 shows a program of tracking control executed by the system controller 11 at regular intervals in the search reproduce mode of operation in order to avoid the above drawback.

After entering the program, the routine proceeds to step 110 wherein it is determined whether the information recording/reproduction apparatus is in the search reproduce mode or not. If a NO answer is obtained, then the routine proceeds to step 120 wherein a tracking control parameter TRC is set to a standard reproduction control value TRC0. The tracking control parameter TRC is a parameter for shifting the magnetic head over two (corresponding to image signals for one frame in the VHS mode) of recorded tracks in 253 steps. Specifically, when the tracking control parameter TRC is incremented by one, a relative position of a scanning path of the magnetic head to each recorded track is shifted by 2/253 tracks. The standard reproduction control value TRC0 is the optimum value derived through the auto-tracking control or a control value that is one of specified system parameters and used in standard reproduction wherein the magnetic tape is moved at the same speed as that in the record mode of operation.

If a YES answer is obtained in step 110, then the routine proceeds to step 130 wherein the search production is performed in the D-VHS mode or not. If a NO answer is obtained meaning that the search reproduction is performed in the VHS mode, then the routine proceeds to step 140 wherein the tracking control parameter TRC is set to a search reproduction control value TRCS0 for bringing a relative position of a scanning path of the magnetic head to each recorded track into agreement with a desired constant position. Alternatively, if a YES answer is obtained in step 130, then the routine proceeds to step 150 wherein it is determined whether or not a preselected period of time TF (e.g., 1/30 sec.) has passed after step 160 is executed one program cycle earlier. If a NO answer is obtained, then the routine terminates. Alternatively, if a YES answer is obtained, then the routine proceeds to step 160 wherein the tracking control parameter TRC is incremented by one (1).

The tracking control parameter TRC is inputted to the servo circuit 12 through the data but 16. The servo circuit 12 controls the capstan motor 13 so as to bring a relative position of the scanning path of the magnetic head to each recorded track into agreement with a position specified by the tracking control parameter TRC.

The information recording/reproduction apparatus of this embodiment is, as can be seen from the above discussion, designed to increment the tracking control parameter TRC by one (1) to shift the relative position of the scanning path of the magnetic head to each recorded track by 2/253 tracks at regular intervals TF during the search reproduction in the D-VHS mode, thereby enabling information represented by the sub-code to be reproduced correctly in the search reproduce mode of operation. The increment in tracking control parameter TRC may alternatively be two (2) or three (3).

The tracking of the magnetic head is, as described above, shifted by 2/253 tracks at regular intervals of 1/30 sec. An increase in shift of the tracking of the magnetic head will cause rotation of the capstan motor 13 to be changed greatly for an instant, thus resulting in an increase in period of time until the capstan motor 13 is in a steady state and in a high possibility that the magnetic head jumps over a tracking position in which the sub-code may be read. Conversely, a decrease in shift of the tracking of the magnetic head will cause the time required for reading the sub-code to be prolonged. It is, therefore, advisable that a shift of the tracking of the magnetic head be 2/253 tracks. It is also advisable that the time intervals TF at which the tracking of the magnetic head is shifted be 1/30 sec. in order to read the sub-code quickly and precisely. If the tape speed in the search reproduce mode is 14 times the standard reproduction speed, the tracking of the magnetic head is shifted by two tracks in approximately 0.6 sec. (= 1/30 sec. × 253 × 1/14).

While the present invention has been disclosed in terms of the preferred embodiments in order to facilitate better understanding thereof, it should be appreciated that the invention can be embodied in various ways without departing from the principle of the invention. Therefore, the invention should be understood to include all possible embodiments and modifications to the shown embodiments which can be embodied without departing from the principle of the invention as set forth in the appended claims.

## Claims

1. An information reproducing apparatus designed to reproduce analog information and digital information recorded on a storage medium, the apparatus comprising:
a level detecting circuit detecting a level of an output signal reproduced from the storage medium and outputting a signal indicative thereof;
a sub-data detecting circuit detecting sub-data peculiar to the digital information and outputting a signal indicative thereof; and
an information type determining circuit determining whether information being reproduced from the storage medium is analog or digital one based on the signals output from said level detecting circuit and said sub-data detecting circuit.

2. An information reproducing apparatus according to claim 1, for use with a magnetic storage medium, and further comprising an analog information reproducing magnetic head and a digital information reproducing magnetic head, if an angle which a gap of a magnetic head makes with a track recorded on the magnetic storage medium is defined as a head azimuth angle, the analog information reproducing magnetic head being oriented at a first head azimuth angle corresponding to a head azimuth angle of a magnetic head for recording the analog information on the magnetic storage medium, the digital information reproducing magnetic head being oriented at a second head azimuth angle which is different from the first head azimuth angle and which corresponds to a head azimuth angle of a magnetic head for recording the digital information on the magnetic storage medium.

3. An information reproducing apparatus according to claim 2, wherein said information type determining circuit performs auto-tracking control to control a relative position of one of said analog information reproducing magnetic head and said digital information reproducing magnetic head to tracks recorded on the storage medium so as to maximize the level of the signal reproduced from the storage medium, said information type determining circuit making said determination using the signal output from said level detecting circuit after the auto-tracking control.

4. An information reproducing apparatus for reproducing analog and digital information recorded on a magnetic storage medium in a manner wherein, if an angle which a gap of a magnetic head makes with a track recorded on the magnetic storage medium is defined as a head azimuth angle, the digital information is recorded by a digital information recording magnetic head oriented at a head azimuth angle different from that of an analog information recording magnetic head recording the analog information on the magnetic storage medium, comprising:
an analog information reproducing magnetic head oriented at a first head azimuth angle corresponding to the head azimuth angle of the analog information recording magnetic head;
a digital information reproducing magnetic head oriented at a second head azimuth angle corresponding the head azimuth angle of the digital information recording magnetic head;
a level detecting circuit detecting a level of a signal reproduced from the magnetic storage medium through each of said analog information reproducing magnetic head and said digital information reproducing magnetic head to provide a signal indicative thereof; and
an information type determining circuit determining whether information being reproduced from the magnetic storage medium is digital or analog one based on the signal outputted by said level detecting circuit.

5. An information reproducing apparatus according to claim 4, wherein said information type determining circuit performs auto-tracking control to control a relative position of one of said analog information reproducing magnetic head and said digital information reproducing magnetic head to tracks recorded on the magnetic storage medium so as to maximize the level of the signal reproduced from the magnetic storage medium, said information type determining circuit making said determination using the signal outputted from said level detecting circuit after the auto-tracking control.

6. An information reproducing apparatus according to claim 1, 2, 3, 4 or 5, wherein the information reproducing apparatus operates in either of an analog mode for reproducing the analog information and a digital mode for reproducing the digital information, and wherein when the information reproducing apparatus is operating in one of the analog and digital modes, and when the signal output from said level detecting circuit is greater than a preselected level, said information type determining circuit determines that the information being reproduced is one of the analog information and the digital information corresponding to one of the analog mode and the digital mode in which the information reproducing apparatus is operating.

7. An information reproducing apparatus according to any one of the preceding claims, wherein said information type determining circuit makes said determination when information recorded on a control track on the storage medium represents the presence of either of the analog and digital information on the storage medium.

8. An information reproducing apparatus according to any one of the preceding claims, wherein the storage medium is disposed within a cassette which has record type information indicating that the cassette is normally used in recording digital information, and wherein said information type determining circuit makes said determination based on the record type information of the cassette.

9. An information reproducing apparatus designed to reproduce analog information and digital information recorded on a storage medium comprising:
a sub-data detecting circuit detecting sub-data peculiar to the digital information to provide a signal indicative thereof; and
an information type determining circuit determining whether information being reproduced from the storage medium is analog or digital one based on the signal outputted from said sub-data detecting circuit.

10. An information recording and reproducing apparatus designed to record and reproduce analog information and digital information on and from a storage medium comprising:
a level detecting circuit detecting a level of an output signal reproduced from the storage medium and outputting a signal indicative thereof;
a sub-data detecting circuit detecting sub-data peculiar to the digital information and outputting a signal indicative thereof; and
an information type determining circuit determining whether information being reproduced from the storage medium is analog or digital one based on the signals outputted from said level detecting circuit and said sub-data detecting circuit.

11. An information recording and reproducing apparatus for recording and reproducing analog and digital information on and from a magnetic storage medium comprising:
an analog information recording/reproducing magnetic head oriented at a first head azimuth angle that is an angle which a gap of the head makes with a track recorded on the magnetic storage medium;
a digital information recording/reproducing magnetic head oriented at a second head azimuth angle different from the first head azimuth angle;
a level detecting circuit detecting a level of a signal reproduced from the magnetic storage medium through each of said analog information recording/reproducing magnetic head and said digital information recording/reproducing magnetic head to provide a signal indicative thereof; and
an information type determining circuit determining whether information being reproduced from the magnetic storage medium is digital or analog one based on the signal outputted by said level detecting circuit.

12. An information recording and reproducing apparatus designed to record and reproduce analog information and digital information on and from a storage medium comprising:
a sub-data detecting circuit detecting sub-data peculiar to the digital information to provide a signal indicative thereof; and
an information type determining circuit determining whether information being reproduced from the storage medium is analog or digital one based on the signal outputted from said sub-data detecting circuit.

13. An information reproducing apparatus comprising:
a magnetic head scanning tracks which are recorded on a magnetic tape and which slant to a length of the magnetic tape to reproduce information from the magnetic tape; and
a tracking control mechanism shifting a relative position of a scanning path of said magnetic head to the tracks on the magnetic tape gradually with time in a reproduction mode of operation in which the magnetic tape is moved at a speed faster than that in a recording mode of operation .

14. An information reproducing apparatus according to claim 13,
wherein said tracking control mechanism shifts said relative position by a given amount at regular intervals.

15. An information recording and reproducing apparatus comprising:
a magnetic head scanning tracks which are recorded on a magnetic tape and which slant to a length of the magnetic tape to record and reproduce information on and from the magnetic tape; and
a tracking control mechanism shifting a relative position of a scanning path of said magnetic head to the tracks on the magnetic tape gradually with time in a reproduction mode of operation in which the magnetic tape is moved at a speed faster than that in a recording mode of operation.
